# EUROPEAN PATENT SPECIFICATION

(11) **EP 4 252 049 B1**
(45) Date of publication and mention of the grant of the patent: **09.10.2024**
(21) Application number: 20800109.9
(22) Date of filing: 24.11.2020
(51) Int. Cl.: G02B 6/04, F21V 8/00, F21S 43/237

(54) **LIGHTING DEVICE FOR A MOTOR VEHICLE**
BELEUCHTUNGSEINRICHTUNG FÜR EIN KRAFTFAHRZEUG
DISPOSITIF D'ÉCLAIRAGE POUR VÉHICULE AUTOMOBILE

(43) Date of publication of application: 04.10.2023
(73) Proprietor: HELLA GmbH & Co. KGaA, 59552 Lippstadt (DE)
(72) Inventor: EICHHORN, Karsten, 59329 Wadersloh (DE); HOHMANN, Carsten, 59581 Warstein (DE); KARTHAUS, Daniela, 33142 Büren (DE); MÜGGE, Martin, 59590 Geseke (DE); NIEDLING, Mathias, 59558 Lippstadt (DE); OGONDA, Matthias, 59555 Lippstadt (DE); SMARSLIK, Christian, 59555 Lippstadt (DE); WILLEKE, Benjamin, 59557 Lippstadt (DE)
(74) Representative: Behr-Wenning, Gregor
(86) International application number: PCT/EP2020/080440
(87) International publication number: WO 2022/111785

(56) References cited:
- WO-A1-2021/104626
- DE-A1- 102012 101 451
- US-A- 4 997 259
- US-A1- 2020 174 277
- MAFI ARASH: "Transverse Anderson localization of light: a tutorial", ADVANCES IN OPTICS AND PHOTONICS, vol. 7, no. 3, 30 September 2015 (2015-09-30), pages 459, XP055822411, Retrieved from the Internet <URL:https://www.osapublishing.org/DirectPDFAccess/A9ECA9D0-92DE-4834-A2F2B366FF245762_321192/aop-7-3-459.pdf?da=1&id=321192&seq=0&mobile=no> DOI: 10.1364/AOP.7.000459

## Description

The present invention concerns a lighting device for a motor vehicle according to the preamble of claim 1.

In line with current styling trends, lighting devices for motor vehicles are becoming smaller and smaller, especially narrower, with reduced height, and at the same time they are becoming more and more widespread, for example to have a continuous, non-divided light signature at the front and/or rear of the vehicle. In order to create a fine, thin light line and also to simplify the manufacturability of the entire system, thin and in particular flexible light guides can be used into which light is coupled at the front end and which exits laterally distributed over the length of the light guide.

An lighting device of the type mentioned above is known from DE 10 2012 101 451 A1. The lighting device comprises a plurality of light emitting diodes (LED), from which light is emitted when the lighting device is in operation. The lighting device also includes a reflector that reflects the light onto a light coupler. The light coupler is made of transparent material so that the light inside the light coupler is guided from an entry surface to an exit surface. The entry surface has a larger diameter than the exit surface. Furthermore the entry surface of the light coupler is convex. Additionally, the lateral surface of the light coupler is concavely curved. At the exit surface of the light coupler there is the frontal entry surface of a light guide, from whose lateral surface the light can exit distributed over the length of the light guide. The chosen design of the light coupler ensures that the light at least partially impinges on the comparatively small entry surface of the light guide and is coupled into it.

A disadvantage is the comparatively complex design of the light coupler. Furthermore the light coupler cannot guarantee an effective coupling of the light into the light guide with a small cross section of the entry surface of the light guide.

From the US 2020/0174277 A1 devices are known, which utilize holographic 4D plenoptic capture and display technologies to generate a light field function to provide glasses-less vision correction for observers with imperfect vision, and to project an image according to the generated light field function. Furthermore, methods are disclosed for calibrating a four-dimensional light field for a user with an uncorrected visual acuity.

From the US 4 997 259 A an optical system is known having a light source, a uniforming device and an optical fiber type lightguide, wherein the uniforming device comprises a first optical transmission portion connected to the lightguide and a second optical transmission portion connected to the first optical transmission portion including a plurality of optical fibers stretching across the inside thereof which are arranged in such a manner that a light-receiving end of each of the optical fibers is placed at a randomly assigned position on a light-receiving end of the second optical transmission portion and on the other hand a light-emitting end of each of the optical fibers is placed at a randomly assigned position on a light-emitting end of the second optical transmission portion, thereby uniforming the distribution of the quantity of light emitted therefrom.

A tutorial is known form MAFI ARASH, "Transverse Anderson localization of light: a tutorial", ADVANCES IN OPTICS AND PHOTONICS, vol. 7, no. 3, doi:10.1364/AOP.7.000459, (20150930), page 459. The tutorial gives an overview of the transverse Anderson localization of light in one and two transverse dimensions. A pedagogical approach is followed throughout the presentation, where many aspects of localization are illustrated by means of a few simple models. The tutorial starts with some basic aspects of random matrix theory and light propagation through and reflection from a random stack of dielectric slabs. Transverse Anderson localization of light in one- and two-dimensional coupled waveguide arrays is subsequently established and discussed. Recent experimental observations of localization and image transport in disordered optical fibers are discussed. More advanced topics, such as hyper-transport in longitudinally varying disordered waveguides, the impact of nonlinearity, and propagation of partially coherent and quantum light, are also examined.

The problem underlying the present invention is the creation of an lighting device of the type mentioned at above, which enables an effective coupling of the light into the light guide even with a small cross-section of the entry surface of the light guide.

According to the invention, this is achieved by a lighting device of the aforementioned kind with the characteristic features of claim 1. The subclaims concern preferred embodiments of the invention.

According to claim 1 it is intended that the light guiding within the light coupler is based on the Anderson Localization, preferably the Transversal Anderson Localization. The Transversal Anderson Localization ensures that light can propagate in the light coupler essentially exclusively in the direction in which the entry surface and the exit surface are opposite each other. This ensures that the light entering the entry surface exits the exit surface almost completely and can be coupled very effectively into the light guide if the entry surface of the light guide is suitably arranged.

It may be provided that the light coupler comprises at least two light-guiding materials having refractive indices different from each other, wherein for example one of the materials may be air. Two light-guiding materials with different refractive indices can lead to the occurrence of the Transverse Anderson Localization. The effect is greater if the difference in refractive indices is as large as possible. The transparent, light-guiding materials can be especially plastic or glass.

It is possible for the light coupler to comprise a plurality of fibers, preferably the individual fibers having a cross-section smaller than 500 nm. The aim is to achieve a cross-section of the individual fibers that is smaller than the wavelength of the visible light. The wavelength of visible light lies in the range from 380 nm to 780 nm. Due to a fiber cross-section smaller than 500 nm a light guiding based on the Transversal Anderson Localization is efficiently possible.

It may be provided that the light coupler comprises a plurality of first fibers having a first refractive index and a plurality of second fibers having a second refractive index different from the first refractive index. The alternating fibers correspond to the two transparent, light-guiding materials with different refractive indices.

It is possible for the first and the second fibers to be arranged randomly next to one another in transverse directions, said transverse directions being perpendicular to the direction of propagation of the light propagating from the at least one entry surface to the exit surface. As a result, the at least two optical materials with different refractive indices are arranged stochastically or randomly along two transverse dimensions of the light coupler and run homogeneously along the third dimension, the third dimension corresponding to the direction of propagation of the light propagating from the at least one entry surface to the exit surface. The refractive index is thus constant in one dimension along the respective fiber and randomized over all fibers along the two remaining dimensions. This favors the occurrence of the Transversal Anderson localization, so that the light propagates essentially exclusively in the third dimension or in the direction in which the entry surface and the exit surface are opposite each other.

It may be provided that the light coupler is made by compressing, heating and drawing the plurality of first and second fibers or a plurality of fibers with air inclusions in random arrangement, so that by fusing the different fibers or the fibers with air inclusions a mixed light-guiding material with at least two different refractive indices is produced. By heating and drawing, the cross-section of the fibers can be reduced to dimensions smaller than 500 nm. Furthermore, this results in a firm bond between the individual fibers. If only one type of fibers with air inclusions is used, the compressing, heating and drawing of the air inclusions creates elongated air ducts extending between the entry surface and the exit surface. The fibers and the air ducts are arranged stochastically or randomly. In both cases this light-guiding material shows in a special way the desired material properties for a light guide based on the Transversal Anderson Localization. The material has a statistically varying transverse refractive index and a longitudinally constant refractive index in the direction between the entry surface and the exit surface.

It is possible that the light coupler has a decreasing cross-section starting from its entry surface, wherein the shape of the light coupler corresponds to a truncated cone or a truncated pyramid and the smaller diameter of the truncated cone or the truncated pyramid faces the entry surface of the light guide. It may be provided that the extension of the exit surface of the light coupler is smaller than or equal to the extension of the entry surface of the light guide, in particular wherein the diameter of the exit surface of the light coupler is smaller than or equal to the diameter of the entry surface of the light guide. By such a design the light can be directed and bundled to the smaller light entry surface of the light guide like in a funnel. This results in an effective coupling of the light impinging on the light coupler into the optical fiber.

It is possible that the exit surface of the light coupler abuts the entry surface of the light guide, preferably being bonded to the entry surface of the light guide. This enables a very effective coupling of the light into the light guide. It may be advantageous that the light guide has a recess into which the light coupler projects, or in that the light coupler has a recess into which the light guide projects.

It may be provided that no optical component is arranged between the light source and the light coupler, in particular that the entry surface of the light coupler is arranged directly opposite the light emission surface of the at least one light source. This reduces the losses before coupling.

It is possible for the lighting device to comprise several light sources each with a light emitting surface, which are arranged next to one another, in particular in one or two directions, the lighting device is configured so that, during operation of the lighting device, light emanating from the light emitting surfaces of the light sources enters the entry surface of the light coupler, in particular at least substantially completely.

It may be provided that the extent of the light emitting surface of the at least one light source or the extent of the surface area formed by the light emitting surfaces of the light sources arranged next to one another is smaller than or equal to the extent of the entry surface of the light coupler. This ensures that essentially all light emitted by the at least one light source or by the light sources enters the light coupler.

It is possible that the light guide is an extruded plastic light guide or that the light guide is a glass light guide with an entry surface diameter of less than 2 mm or that the light guide is a glass light guide bundle with a common entry surface having a diameter of less than 2 mm. Such light guides may be flexible and used to produce a fine, thin line of light, for example at the front and/or rear of the vehicle.

It may be provided that the at least one light source is a light emitting diode (LED). Despite the design of the at least one light source as a light emitting diode, the light generated by the light source can effectively enter the possibly very small light entry surface of the light guide by using the light coupler. Without a light coupler this was previously only possible with laser diodes.

The invention is explained in more detail below on the basis of the attached schematic drawings and shows
- Fig. 1: a perspective view of a first version of a lighting device according to the invention;
- Fig. 2: a perspective view of the lighting device according to Fig. 1 without light coupler;
- Fig. 3: a side view of the lighting device according to Fig. 1;
- Fig. 4: a side view of a second version of a lighting device according to the invention;
- Fig. 5: a perspective view of the lighting device according to Fig. 4;
- Fig. 6: a perspective view of a third version of a lighting device according to the invention;
- Fig. 7: a perspective view of the lighting device according to Fig. 6 without light coupler;
- Fig. 8: a perspective view of a design of a lighting device not in accordance with the invention;
- Fig. 9: a side view of the lighting device as shown in Fig. 8 with light emanating from the light source.

In the figures, identical and functionally identical parts are provided with the same reference signs.

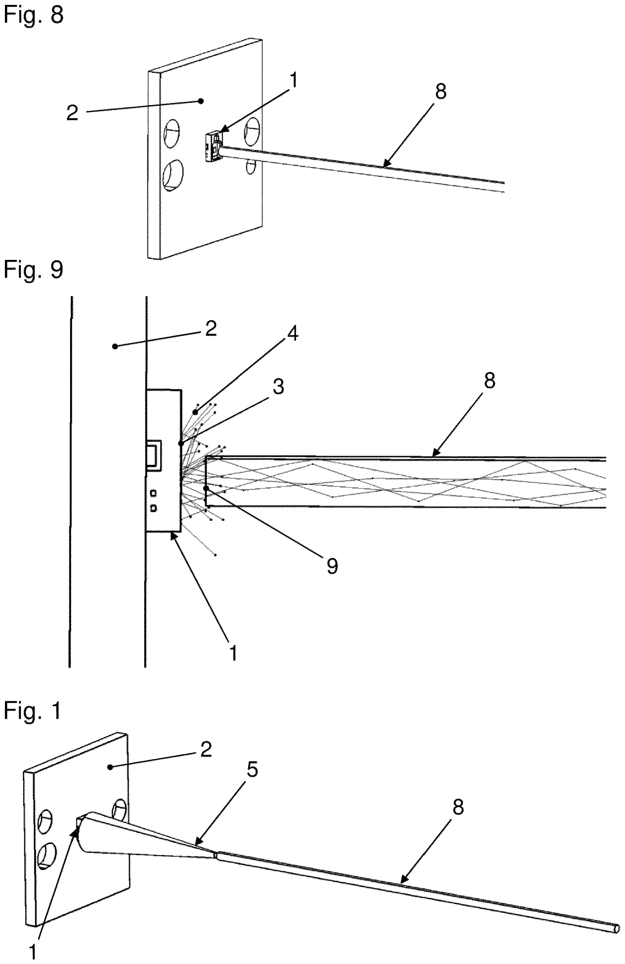

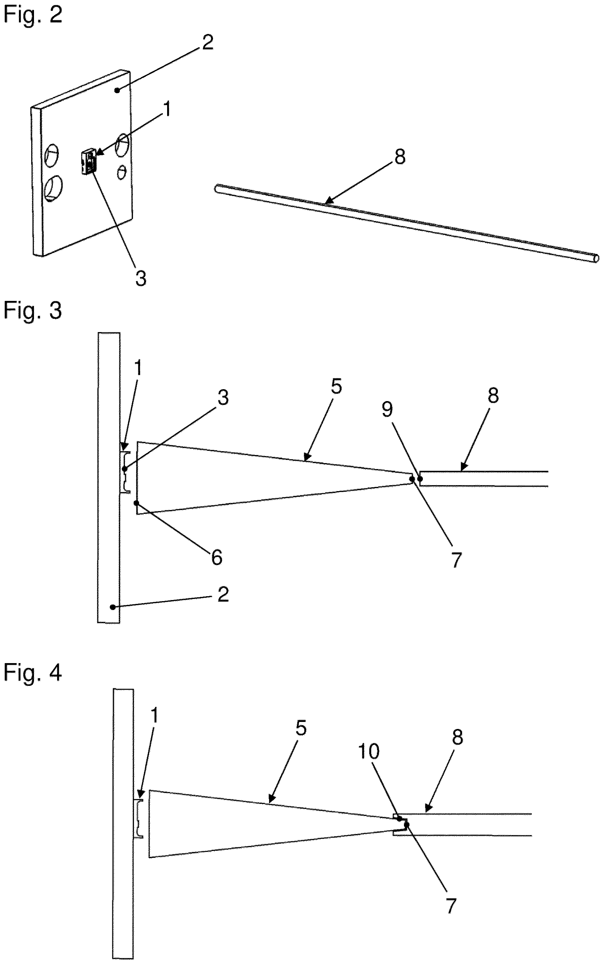

The first version of a lighting device according to the invention shown in Fig. 1 to Fig. 3 comprises a light source 1, which is designed as a light emitting diode arranged on a printed circuit board 2. The light emitting diode or the light source 1 has a light emitting surface 3 (see Fig. 3) from which light 4 is emitted when the lighting device is in operation (see Fig. 9).

The lighting device further comprises a light coupler 5, which has an entry surface 6 and an exit surface 7. During operation of the lighting device, the light emitted from the light emission surface 3 enters the entry surface 6 and is guided inside the light coupler 5 to the exit surface 7. The light coupler 5 has a decreasing cross section starting from its entry surface 6, whereby the shape of the light coupler 5 corresponds to a truncated cone or a truncated pyramid. The larger diameter of the truncated cone or the truncated pyramid faces the light emitting surface 3 of the light source 1.

The extension of the light emission surface 3 of the light source 1 is smaller than the extension of the entry surface 6 of the light coupler 5 (see Fig. 3). Furthermore, the entry surface 6 of the light coupler 5 is located directly in front of the light emission surface 3 and projects beyond the light emission surface 3 in the directions parallel to the plane of the printed circuit board 2. This ensures that essentially all light emanating from the light source 1 enters the light coupler 5.

The light coupler 5 can consist of two transparent, light-conducting materials with different refractive indices, which can be designed in particular as first and second fibers. The fibers can be randomly arranged next to each other in transverse directions, the transverse directions being perpendicular to the direction in which the entry face 6 and the exit face 7 are opposite each other.

The refractive index is thus constant in one dimension along each fiber and randomized across all fibers along the two remaining dimensions, resulting in an effect known as Transversal Anderson Localization. Accordingly, the light inside the light coupler 5 propagates essentially exclusively in the third dimension or in the direction in which the entry surface and the exit surface are opposite each other.

The lighting device further comprises a light guide 8, which has an entry surface 9 facing the exit surface 7 of the light coupler 5. The light guide 8 may have non-imaged, suitable structures which cause the light to emerge laterally from the outer surface of the light guide 8, distributed over the length of the light guide 8.

The light guide 8 can be very thin and flexible. The light guide 8 can be an extruded plastic light guide, for example. Alternatively, the light guide 8 can be a thin glass light guide with an entry surface diameter of less than 2 mm, for instance a diameter of 1 mm. Alternatively, the light guide 8 can be a thin glass light guide bundle with a common entry surface having a diameter of less than 2 mm, for instance a diameter of 1 mm. Such light guides can be flexible and can be used to create a fine, thin line of light, for example at the front and/or rear of the vehicle.

The extension of the exit surface 7 of the light coupler 5 is smaller than the extension of the entry surface 9 of the light guide 8. It may be provided that the exit surface 7 of the light coupler 5 lies against the entry surface 9 of the light guide 8, preferably glued to it.

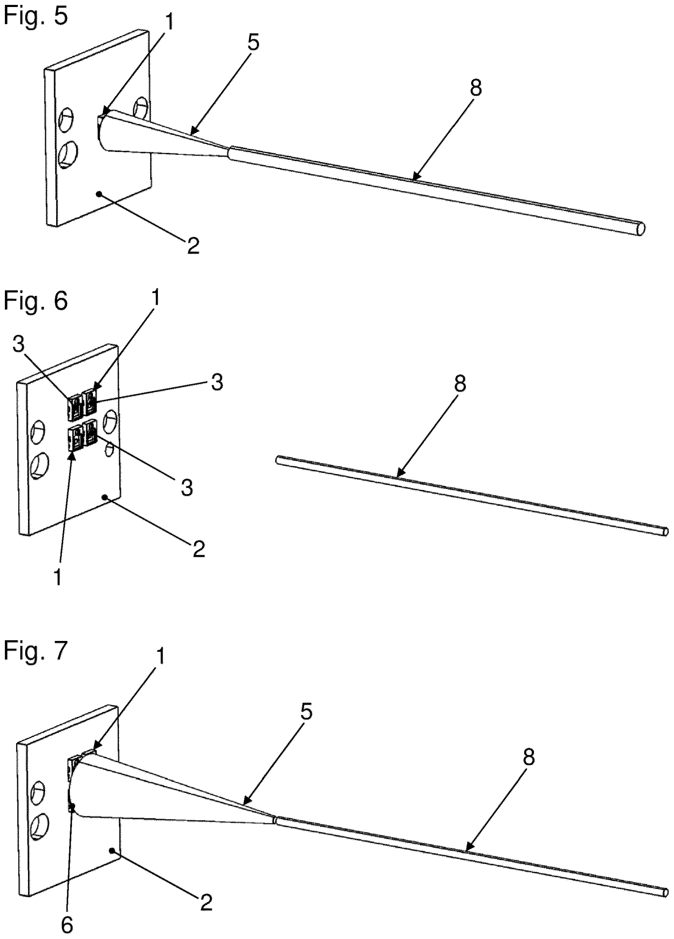

In the design according to Figs. 4 and 5, the light guide has a recess 10 into which the end of the light coupler 5 provided with the exit surface 7 projects. Alternatively, the light coupler 5 may have a recess not shown in the illustration into which the light guide 8 can protrude.

The design of the lighting device according to Figs. 6 and 7 comprises four light sources 1 designed as light emitting diodes, each with a light emitting surface 3. The light emitting diodes are arranged next to each other in two directions on the circuit board 2 (see Fig. 7).

Here, the extension of the surface area formed by the adjacent light emitting surfaces 3 of the light sources 1 is smaller than the extension of the entry surface 6 of the light coupler 5 (see Fig. 6). This ensures that essentially all light emitted by the light sources 1 enters the light coupler 5.

Fig. 8 and Fig. 9 illustrate a situation in which a light coupler 5 is not used and the entry surface 9 of the light guide 8 is located directly in front of the light emission surface 3 of a light source. It can be seen in Fig. 9 that without the light coupler 5, a large part of the light 4 does not enter the entry surface 9. Fig. 8 and Fig. 9 thus illustrate the importance of the light coupler 5 for the effective coupling of the light 4 into the light guide 8.

### List of reference signs

- 1: Light source
- 2: Printed circuit board
- 3: Light emitting surface of the light source 1
- 4: Light emanating from the light emitting surface 3 of the light source 1
- 5: Light coupler
- 6: Entry surface of the light coupler 5
- 7: Exit surface of the light coupler 5
- 8: Light guide
- 9: Entry surface of the light guide 8
- 10: Recess of the light guide 8

## Claims

1. Lighting device for a motor vehicle, comprising
- at least one light source (1) with a light emitting surface (3),
- a light coupler (5) having an entry surface (6) and an exit surface (7), the entry surface (6) having a greater extent than the exit surface (7), wherein the light coupler (5) comprises at least one light-guiding material such as plastic or glass, and
- a light guide (8) with an entry surface (9), wherein the lighting device is configured so that during operation of the lighting device light (4) emanating from the light emitting surface (3) of the at least one light source (1) enters the entry surface (6) of the light coupler (5), is guided within the light coupler (5) from the entry surface (6) to the exit surface (7), emerges from the exit surface (7) of the light coupler (5) and enters the entry surface (9) of the light guide (8),
**characterized in that** the light guiding within the light coupler (5) is based on the Anderson Localization, preferably the Transversal Anderson Localization.

2. Lighting device according to claim 1, **characterized in that** the light coupler (5) comprises at least two light-guiding materials having refractive indices different from each other, wherein for example one of the materials may be air.

3. Lighting device according to one of claims 1 or 2, **characterized in that** the light coupler (5) comprises a plurality of fibers, preferably the individual fibers having a cross-section smaller than 500 nm.

4. Lighting device according to claim 3, **characterized in that** the light coupler (5) comprises a plurality of first fibers having a first refractive index and a plurality of second fibers having a second refractive index different from the first refractive index.

5. Lighting device according to one of claims 3 or 4, **characterized in that** the first and the second fibers are arranged randomly next to one another in transverse directions, said transverse directions being perpendicular to the direction of propagation of the light (4) propagating from the at least one entry surface (6) to the exit surface (7).

6. Lighting device according to one of claims 3 to 5, **characterized in that** the light coupler (5) is made by compressing, heating and drawing the plurality of first and second fibers or a plurality of fibers with air inclusions in random arrangement, so that by fusing the different fibers or the fibers with air inclusions a mixed light-guiding material with at least two different refractive indices is produced.

7. Lighting device according to one of claims 1 to 6, **characterized in that** the light coupler (5) has a decreasing cross-section starting from its entry surface (6), wherein the shape of the light coupler (5) corresponds to a truncated cone or a truncated pyramid and the smaller diameter of the truncated cone or the truncated pyramid faces the entry surface (9) of the light guide (8).

8. Lighting device according to one of claims 1 to 7, **characterized in that** the extension of the exit surface (7) of the light coupler (5) is smaller than or equal to the extension of the entry surface (9) of the light guide (8), in particular wherein the diameter of the exit surface (7) of the light coupler (5) is smaller than or equal to the diameter of the entry surface (9) of the light guide (8).

9. Lighting device according to one of claims 1 to 8, **characterized in that** the exit surface (7) of the light coupler (5) abuts the entry surface (9) of the light guide (8), preferably being bonded to the entry surface (9) of the light guide (8).

10. Lighting device according to one of claims 1 to 9, **characterized in that** the light guide (8) has a recess (10) into which the light coupler (5) projects, or **in that** the light coupler (5) has a recess into which the light guide (8) projects.

11. Lighting device according to one of claims 1 to 10, **characterized in that** no optical component is arranged between the light source (1) and the light coupler (5), in particular **in that** the entry surface (6) of the light coupler (5) is arranged directly opposite the light emitting surface (3) of the at least one light source (1).

12. Lighting device according to one of claims 1 to 11, **characterized in that** the lighting device comprises several light sources (1) each having a light emitting surface (3), which are arranged next to one another in one or two directions in particular, the lighting device is configured so that, during operation of the lighting device, light (4) emanating from the light emitting surfaces (3) of the light sources (1) enters the entry surface (6) of the light coupler (5), in particular at least substantially completely.

13. Lighting device according to one of claims 1 to 12, **characterized in that** the extent of the light emitting surface (3) of the at least one light source (1) or the extent of the surface area formed by the light emitting surfaces (3) of the light sources (1) arranged next to one another is smaller than or equal to the extent of the entry surface (6) of the light coupler (5).

14. Lighting device according to one of claims 1 to 13, **characterized in that** the light guide (8) is an extruded plastic light guide or that the light guide (8) is a glass light guide with an entry surface (9) diameter of less than 2 mm or that the light guide (8) is a glass light guide bundle with a common entry surface (9) having a diameter of less than 2 mm.

15. Lighting device according to one of claims 1 to 14, **characterized in that** the at least one light source (1) is a light emitting diode.

## Patentansprüche

1. Beleuchtungseinrichtung für ein Kraftfahrzeug, umfassend:
- mindestens eine Lichtquelle (1) mit einer lichtemittierenden Oberfläche (3),
- einen Lichtkoppler (5) mit einer Eintrittsfläche (6) und einer Austrittsfläche (7), wobei die Eintrittsfläche (6) eine größere Ausdehnung als die Austrittsfläche (7) aufweist, wobei der Lichtkoppler (5) mindestens ein lichtleitendes Material wie Kunststoff oder Glas umfasst, und
- einen Lichtleitstab (8) mit einer Eintrittsfläche (9), wobei die Beleuchtungseinrichtung so konfiguriert ist, dass während des Betriebs der Beleuchtungseinrichtung von der lichtemittierenden Oberfläche (3) der mindestens einen Lichtquelle (1) ausstrahlendes Licht (4) in die Eintrittsfläche (6) des Lichtkopplers (5) eintritt, innerhalb des Lichtkopplers (5) von der Eintrittsfläche (6) zur Austrittsfläche (7) geleitet wird, von der Austrittsfläche (7) des Lichtkopplers (5) austritt und in die Eintrittsfläche (9) des Lichtleitstabs (8) eintritt,
**dadurch gekennzeichnet, dass** die Lichtleitung innerhalb des Lichtkopplers (5) auf der Anderson-Lokalisierung, vorzugsweise der Transversalen Anderson-Lokalisierung, basiert.

2. Beleuchtungseinrichtung nach Anspruch 1, **dadurch gekennzeichnet, dass** der Lichtkoppler (5) mindestens zwei lichtleitende Materialien umfasst, die voneinander verschiedene Brechungsindizes aufweisen, wobei eines der Materialien beispielsweise Luft sein kann.

3. Beleuchtungseinrichtung nach einem der Ansprüche 1 oder 2, **dadurch gekennzeichnet, dass** der Lichtkoppler (5) eine Vielzahl von Fasern umfasst, wobei die einzelnen Fasern vorzugsweise einen Querschnitt aufweisen, der kleiner als 500 nm ist.

4. Beleuchtungseinrichtung nach Anspruch 3, **dadurch gekennzeichnet, dass** der Lichtkoppler (5) eine Vielzahl von ersten Fasern umfasst, die einen ersten Brechungsindex aufweisen, und eine Vielzahl von zweiten Fasern, die einen zweiten Brechungsindex aufweisen, der von dem ersten Brechungsindex verschieden ist.

5. Beleuchtungseinrichtung nach einem der Ansprüche 3 oder 4, **dadurch gekennzeichnet, dass** die erste und die zweite Faser wahllos nebeneinander in Querrichtungen angeordnet sind, wobei die Querrichtungen senkrecht zur Ausbreitungsrichtung des Lichts (4) sind, das sich von der mindestens einen Eintrittsfläche (6) zur Austrittsfläche (7) ausbreitet.

6. Beleuchtungseinrichtung nach einem der Ansprüche 3 bis 5, **dadurch gekennzeichnet, dass** der Lichtkoppler (5) durch Verdichten, Erwärmen und Ziehen der Vielzahl von ersten und zweiten Fasern oder einer Vielzahl von Fasern mit Lufteinschlüssen in wahlloser Anordnung hergestellt ist, sodass durch Verschmelzen der verschiedenen Fasern oder der Fasern mit Lufteinschlüssen ein gemischtes Lichtleitmaterial mit mindestens zwei unterschiedlichen Brechungsindizes produziert wird.

7. Beleuchtungseinrichtung nach einem der Ansprüche 1 bis 6, **dadurch gekennzeichnet, dass** der Lichtkoppler (5) einen sich verkleinernden Querschnitt, beginnend von seiner Eintrittsfläche (6), aufweist, wobei die Form des Lichtkopplers (5) einem abgeschnittenen Kegel oder einer abgeschnittenen Pyramide entspricht und der kleinere Durchmesser des abgeschnittenen Kegels oder der abgeschnittenen Pyramide der Eintrittsfläche (9) des Lichtleitstabs (8) zugewandt ist.

8. Beleuchtungseinrichtung nach einem der Ansprüche 1 bis 7, **dadurch gekennzeichnet, dass** die Ausdehnung der Austrittsfläche (7) des Lichtkopplers (5) kleiner als oder gleich groß wie die Ausdehnung der Eintrittsfläche (9) des Lichtleitstabs (8) ist, wobei insbesondere der Durchmesser der Austrittsfläche (7) des Lichtkopplers (5) kleiner als oder gleich groß wie der Durchmesser der Eintrittsfläche (9) des Lichtleitstabs (8) ist.

9. Beleuchtungseinrichtung nach einem der Ansprüche 1 bis 8, **dadurch gekennzeichnet, dass** die Austrittsfläche (7) des Lichtkopplers (5) an die Eintrittsfläche (9) des Lichtleitstabs (8) angrenzt, vorzugsweise verbunden mit der Eintrittsfläche (9) des Lichtleitstabs (8).

10. Beleuchtungseinrichtung nach einem der Ansprüche 1 bis 9, **dadurch gekennzeichnet, dass** der Lichtleitstab (8) eine Ausnehmung (10) aufweist, in die der Lichtkoppler (5) vorsteht, oder dadurch, dass der Lichtkoppler (5) eine Ausnehmung aufweist, in die der Lichtleitstab (8) vorsteht.

11. Beleuchtungseinrichtung nach einem der Ansprüche 1 bis 10, **dadurch gekennzeichnet, dass** zwischen der Lichtquelle (1) und dem Lichtkoppler (5) keine optische Komponente angeordnet ist, insbesondere dadurch, dass die Eintrittsfläche (6) des Lichtkopplers (5) direkt gegenüber der lichtemittierenden Oberfläche (3) der mindestens einen Lichtquelle (1) angeordnet ist.

12. Beleuchtungseinrichtung nach einem der Ansprüche 1 bis 11, **dadurch gekennzeichnet, dass** die Beleuchtungseinrichtung mehrere Lichtquellen (1) umfasst, die jeweils eine lichtemittierende Oberfläche (3) aufweisen, die nebeneinander in einer oder zwei Richtungen angeordnet sind, wobei die Beleuchtungseinrichtung insbesondere so konfiguriert ist, dass während des Betriebs der Beleuchtungseinrichtung von den lichtemittierenden Oberflächen (3) ausstrahlendes Licht (4) der Lichtquellen (1) in die Eintrittsfläche (6) des Lichtkopplers (5) eintritt, insbesondere mindestens im Wesentlichen vollständig.

13. Beleuchtungseinrichtung nach einem der Ansprüche 1 bis 12, **dadurch gekennzeichnet, dass** die Ausdehnung der lichtemittierenden Oberfläche (3) der mindestens einen Lichtquelle (1) oder die Ausdehnung des durch die lichtemittierenden Oberflächen (3) der nebeneinander angeordneten Lichtquellen (1) ausgebildeten Oberflächenbereichs kleiner als oder gleich groß wie die Ausdehnung der Eintrittsfläche (6) des Lichtkopplers (5) ist.

14. Beleuchtungseinrichtung nach einem der Ansprüche 1 bis 13, **dadurch gekennzeichnet, dass** der Lichtleitstab (8) ein stranggepresster Kunststofflichtleitstab ist oder dass der Lichtleitstab (8) ein Glaslichtleitstab mit einem Durchmesser der Eintrittsfläche (9) von weniger als 2 mm ist oder dass der Lichtleitstab (8) ein Glaslichtleitbündel mit einer gemeinsamen Eintrittsfläche (9) ist, die einen Durchmesser von weniger als 2 mm aufweist.

15. Beleuchtungsvorrichtung nach einem der Ansprüche 1 bis 14, **dadurch gekennzeichnet, dass** die mindestens eine Lichtquelle (1) eine lichtemittierende Diode ist.

## Revendications

1. Dispositif d'éclairage pour un véhicule automobile, comprenant
- au moins une source de lumière (1) avec une surface électroluminescente (3),
- un coupleur de lumière (5) doté d'une surface d'entrée (6) et une surface de sortie (7), la surface d'entrée (6) étant plus grande que la surface de sortie (7), le coupleur de lumière (5) comprenant au moins un matériau de guidage de la lumière tel que le plastique ou le verre, et
- un guide de lumière (8) avec une surface d'entrée (9), dans lequel le dispositif d'éclairage est configuré pour que, pendant le fonctionnement du dispositif d'éclairage, la lumière (4) émanant de la surface électroluminescente (3) d'au moins une source de lumière (1) pénètre dans la surface d'entrée (6) du coupleur de lumière (5), soit guidée à l'intérieur du coupleur de lumière (5) de la surface d'entrée (6) à la surface de sortie (7), sorte de la surface de sortie (7) du coupleur de lumière (5) et pénètre dans la surface d'entrée (9) du guide de lumière (8),
**caractérisé en ce que** le guidage de la lumière à l'intérieur du coupleur de lumière (5) est basé sur la localisation d'Anderson, de préférence la localisation transversale d'Anderson.

2. Dispositif d'éclairage selon la revendication 1, **caractérisé en ce que** le coupleur de lumière (5) comprend au moins deux matériaux de guidage de la lumière ayant des indices de réfraction différents l'un de l'autre, l'un des matériaux pouvant par exemple être de l'air.

3. Dispositif d'éclairage selon l'une des revendications 1 ou 2, **caractérisé en ce que** le coupleur de lumière (5) comprend plusieurs fibres, de préférence les fibres individuelles ayant une section transversale inférieure à 500 nm.

4. Dispositif d'éclairage selon la revendication 3, **caractérisé en ce que** le coupleur de lumière (5) comprend plusieurs premières fibres présentant un premier indice de réfraction et plusieurs secondes fibres présentant un second indice de réfraction différent du premier indice de réfraction.

5. Dispositif d'éclairage selon l'une des revendications 3 ou 4, **caractérisé en ce que** les premières et les secondes fibres sont disposées aléatoirement les unes à côté des autres dans les directions transversales, lesdites directions transversales étant perpendiculaires à la direction de propagation de la lumière (4) se propageant d'au moins une surface d'entrée (6) à la surface de sortie (7).

6. Dispositif d'éclairage selon l'une des revendications 3 à 5, **caractérisé en ce que** le coupleur de lumière (5) est fabriqué en comprimant, chauffant et étirant les premières et deuxièmes fibres ou plusieurs fibres avec des inclusions d'air dans une disposition aléatoire, de sorte que la fusion des différentes fibres ou des fibres avec des inclusions d'air produit un matériau mixte de guidage de la lumière avec au moins deux indices de réfraction différents.

7. Dispositif d'éclairage selon l'une des revendications 1 à 6, **caractérisé en ce que** le coupleur de lumière (5) présente une section transversale décroissante à partir de sa surface d'entrée (6), la forme du coupleur de lumière (5) correspondant à un cône tronqué ou à une pyramide tronquée et le plus petit diamètre du cône tronqué ou de la pyramide tronquée faisant face à la surface d'entrée (9) du guide de lumière (8).

8. Dispositif d'éclairage selon l'une des revendications 1 à 7, **caractérisé en ce que** l'extension de la surface de sortie (7) du coupleur de lumière (5) est inférieure ou égale à l'extension de la surface d'entrée (9) du guide de lumière (8), le diamètre de la surface de sortie (7) du coupleur de lumière (5) étant en particulier inférieur ou égal au diamètre de la surface d'entrée (9) du guide de lumière (8).

9. Dispositif d'éclairage selon l'une des revendications 1 à 8, **caractérisé en ce que** la surface de sortie (7) du coupleur de lumière (5) vient en butée contre la surface d'entrée (9) du guide de lumière (8), en étant de préférence collée à la surface d'entrée (9) du guide de lumière (8).

10. Dispositif d'éclairage selon l'une des revendications 1 à 9, **caractérisé en ce que** le guide de lumière (8) présente un renfoncement (10) dans lequel le coupleur de lumière (5) projette la lumière, ou **en ce que** le coupleur de lumière (5) présente un renfoncement dans lequel le guide de lumière (8) projette la lumière.

11. Dispositif d'éclairage selon l'une des revendications 1 à 10, **caractérisé en ce qu'**aucun composant optique n'est disposé entre la source de lumière (1) et le coupleur de lumière (5), en particulier **en ce que** la surface d'entrée (6) du coupleur de lumière (5) est disposée directement en face de la surface d'émission de lumière (3) d'au moins une source de lumière (1).

12. Dispositif d'éclairage selon l'une des revendications 1 à 11, **caractérisé en ce que** le dispositif d'éclairage comprend plusieurs sources de lumière (1) avec chacune une surface électroluminescente (3), qui sont disposées les unes à côté des autres dans une ou deux directions en particulier, le dispositif d'éclairage est configuré de sorte que, pendant le fonctionnement du dispositif d'éclairage, la lumière (4) émanant des surfaces électroluminescentes (3) des sources de lumière (1) pénètre dans la surface d'entrée (6) du coupleur de lumière (5), en particulier au moins de manière substantielle.

13. Dispositif d'éclairage selon l'une des revendications 1 à 12, **caractérisé en ce que** l'étendue de la surface électroluminescente (3) d'au moins une source de lumière (1) ou l'étendue de la surface formée par les surfaces électroluminescentes (3) des sources de lumière (1) disposées les unes à côté des autres est inférieure ou égale à l'étendue de la surface d'entrée (6) du coupleur de lumière (5).

14. Dispositif d'éclairage selon l'une des revendications 1 à 13, **caractérisé en ce que** le guide de lumière (8) est un guide de lumière en plastique extrudé ou **en ce que** le guide de lumière (8) est un guide de lumière en verre avec une surface d'entrée (9) d'un diamètre inférieur à 2 mm ou **en ce que** le guide de lumière (8) est un faisceau de guides de lumière en verre avec une surface d'entrée commune (9) d'un diamètre inférieur à 2 mm.

15. Dispositif d'éclairage selon l'une des revendications 1 à 14, **caractérisé en ce que** la source de lumière (1) au moins est une diode électroluminescente.
